# EUROPÄISCHE PATENTANMELDUNG

(11) **EP 1 942 387 A1**
(43) Veröffentlichungstag der Anmeldung: **09.07.2008**
(21) Anmeldenummer: 07000143.3
(22) Anmeldetag: 04.01.2007
(51) Int. Cl.: G05B 19/418, B25J 9/16

(54) **Beschichtungskonzept für eine APS/HVOF Anlage mit 2 Robotern**

(71) Anmelder: SIEMENS AKTIENGESELLSCHAFT, 80333 München (DE)
(72) Erfinder: Stadelmaier, Falk, 10559 Berlin (DE)

(57) **Zusammenfassung**

Die Erfindung betrifft ein Verfahren und eine Einrichtung zur Bearbeitung eines Bauteils

Ein Verfahren zur Bearbeitung eines Bauteils, bei dem das Bauteil in einer Halterung an einem Positionierungsroboter befestigt und von einer Bearbeitungsvorrichtung an einem Bearbeitungsroboter automatisch bearbeitet wird, während das Bauteil und die Bearbeitungsvorrichtung gleichzeitig bewegt werden, wobei das Bauteil und die Bearbeitungsvorrichtung so bewegt werden, dass ihre jeweiligen Bewegungsvektoren während eines Großteils der Bearbeitung kollinear entgegengesetzt orientiert sind.

## Beschreibung

Die Erfindung betrifft ein Verfahren zur Bearbeitung eines Bauteils, bei dem das Bauteil in einer Halterung an einem Positionierungsroboter befestigt und von einer Bearbeitsvorrichtung an einem Bearbeitsroboter automatisch bearbeitet wird, während das Bauteil und die Bearbeitungsvorrichtung gleichzeitig bewegt werden. Die Erfindung betrifft weiterhin eine Einrichtung zum Positionieren und Bearbeiten eines Bauteils.

In der DE 10 2004 021 388 A1 sind ein Verfahren und eine Einrichtung zur Bearbeitung eines Bauteils mit einem Positionierungsroboter und einem Bearbeitungsroboter beschrieben. Hier wird ein Bauteil in einer Halterung an dem Positionierungsroboter befestigt und dann von einem Bearbeitungsroboter, beispielsweise einem Lackierroboter, mit der Hilfe eines daran angebrachten Beschichters als einer Bearbeitungsvorrichtung automatisch beschichtet. Während des Beschichtungsvorgangs werden der Positionierungsroboter und der Bearbeitungsroboter gleichzeitig bewegt. Das bedeutet, dass der Positionierungsroboter und der Bearbeitungsroboter zeitweise synchron und ansonsten aber völlig abhängig voneinander bewegt werden.

Ein Problem bei diesem Verfahren besteht darin, dass der Bearbeitungsroboter sehr schnell bewegt werden muss, um eine hohe Bearbeitungsgeschwindigkeit zu erzielen. In Folge dessen wird der Bearbeitungsroboter mechanisch stark beansprucht und verschleißt schnell. Außerdem leidet unter der hohen Geschwindigkeit auch die Präzision der Bewegung des Bearbeitungsroboters.

Aufgabe der vorliegenden Erfindung ist es daher, ein Verfahren der eingangs genannten Art so auszubilden, dass ein Bauteil schnell, präzise und unter geringer mechanischer Beanspruchung des Bearbeitungsroboters bearbeitet werden kann.

Diese Aufgabe wird dadurch gelöst, dass das Bauteil und die Bearbeitungsvorrichtung so bewegt werden, dass ihre jeweiligen Bewegungsvektoren zumindest während eines Großteils der Bearbeitung kollinear entgegengesetzt orientiert sind.

Grundgedanke der Erfindung ist es also, sowohl das Bauteil als auch die Bearbeitungsvorrichtung während eines Großteils des Bearbeitungsvorgangs, d.h. mehr als 50% der Bearbeitungszeit, in entgegengesetzte Richtungen zu bewegen. Auf diese Weise kann eine hohe Relativgeschwindigkeit zwischen der Bearbeitungsvorrichtung und dem Bauteil und damit auch eine hohe Bearbeitungsgeschwindigkeit erzielt werden, wobei sowohl der Bearbeitungsroboter als auch der Positionierungsroboter mit ihrer Eigenbewegung zu der Bearbeitungsgeschwindigkeit beitragen.

Im Vergleich zu dem Bearbeitungsverfahren des Standes der Technik kann also bei Beibehaltung der Bearbeitungsgeschwindigkeit die Geschwindigkeit der Bewegung des Bearbeitungsroboters verringert werden. Dies führt einerseits dazu, dass die Präzision der Bewegung verbessert werden kann und andererseits dazu, dass der Verschleiß an dem Bearbeitungsroboter verringert wird.

Weiterhin kann die Bearbeitungsgeschwindigkeit deutlich erhöht werden, indem sowohl die Bearbeitungsvorrichtung als auch das Bauteil mit hoher Geschwindigkeit entgegengesetzt bewegt werden.

Es ist möglich, dass das Bauteil und die Bearbeitungsvorrichtung so bewegt werden, dass ihre jeweiligen Bewegungsvektoren kontinuierlich kollinear entgegengesetzt orientiert sind. Hierdurch wird eine maximale Bearbeitungsgeschwindigkeit erzielt.

Gemäß einer Ausführungsform der Erfindung ist vorgesehen, dass der Betrag des Bewegungsvektors der Bearbeitungsvorrichtung genauso groß ist wie der Betrag des Bewegungsvektors des Bauteils. Auf diese Weise wird sichergestellt, dass die Belastung und der Verschleiß gleichmäßig auf den Positionierungsroboter und den Bearbeitungsroboter verteilt werden. Außerdem wird die Koordination der Bewegungen erleichtert. Andererseits ist es aber auch möglich, dass die Beträge der Bewegungsvektoren des Bauteils und der Bearbeitungsvorrichtung unterschiedlich groß sind.

Wenn als Bearbeitungsvorrichtung ein Beschichter verwendet wird, kann das Bauteil auf einfache Weise mit einer Beschichtung versehen werden.

Als Beschichter kann ein Beschichtungsbrenner verwendet werden. Dabei eignet sich insbesondere ein Plasmabrenner. Dieser kann beispielsweise für das Aufbringen von Beschichtungen durch APS (Atmosphere Plasma Spraying) oder HVOF (High Velocity Oxygen Fuel) verwendet werden.

Das Bauteil kann eine Turbinenschaufel sein, wobei hier vorteilhaft ist, dass die komplexe Geometrie der Turbinenschaufel schnell und zuverlässig bearbeitet werden kann.

Die Aufgabe wird auch durch eine Einrichtung mit den Merkmalen des Anspruchs 8 gelöst.

Im Folgenden wird die Erfindung anhand eines Ausführungsbeispiels unter Bezugnahme auf die Zeichnung näher erläutert. In der Zeichnung zeigen:
- Figur 1: eine schematische Darstellung einer erfindungsgemäßen Einrichtung während der Beschichtung einer Turbinenschaufel, und
- Figur 2: ein vergrößerten Ausschnitt aus der Figur 1.

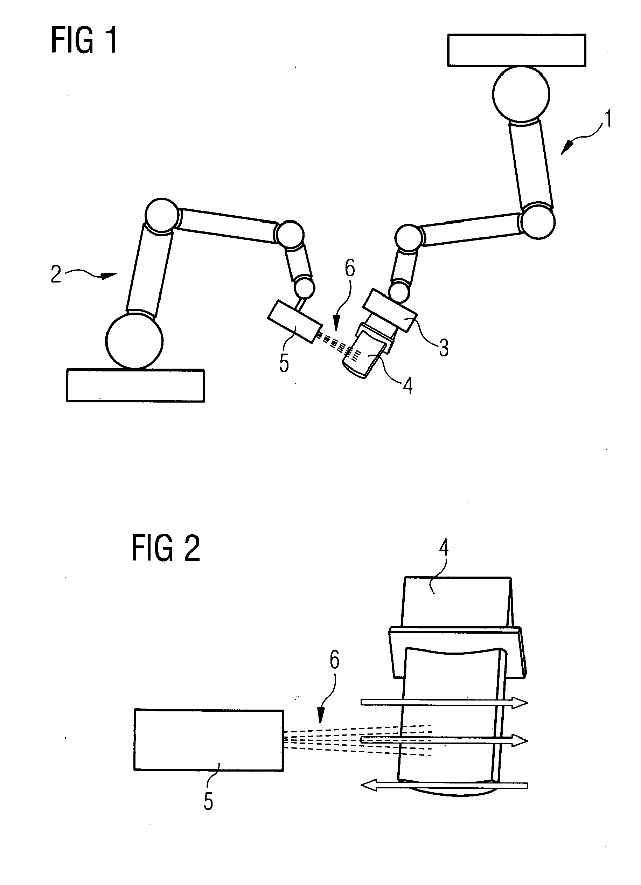

In der Figur 1 ist eine erfindungsgemäße Einrichtung während der Beschichtung einer Turbinenschaufel dargestellt. Die Vorrichtung weist einen Positionierungsroboter 1 und einen Bearbeitungsroboter 2 auf. Der Positionierungsroboter 1 und der Bearbeitungsroboter 2 sind jeweils ausgebildet sich frei im Raum zu bewegen.

Die Ansteuerung des Positionierungsroboters 1 und des Bearbeitungsroboters 2 erfolgt mit Hilfe einer nicht gezeigten Steuervorrichtung.

Der Positionierungsroboter 1 weist eine Halterung 3 auf, in der eine Turbinenschaufel 4 befestigt ist. An dem Bearbeitungsroboter 2 ist ein Beschichter 5 als Bearbeitungsvorrichtung angebracht, der hier als Plasmabrenner für ein APS oder HVOF Beschichtungsverfahren ausgebildet ist. Aus einer nicht dargestellten Abgabeöffnung des Beschichters 5 wird ein Beschichtungsmaterialstrom 6 abgegeben.

Um mit der Vorrichtung die Turbinenschaufel 4 zu beschichten, werden die Turbinenschaufel 4 in der Halterung 3 von dem Positionierungsroboter 1 und der Beschichter 5 von dem Bearbeitungsroboter 2 so bewegt, dass ihre jeweiligen Bewegungsvektoren zumindest während eines Großteils der Beschichtung, d.h. mindestens 50% der Gesamtbeschichtungszeit, kollinear entgegengesetzt orientiert sind. Vorteilhafterweise werden die Turbinenschaufel 4 und der Beschichter 5 so bewegt, dass ihre jeweiligen Bewegungsvektoren kontinuierlich kollinear entgegengesetzt orientiert sind. Dies ist in der Figur 2 durch Pfeile dargestellt, welche die Bewegungsrichtungen des Beschichters 5 und der Turbinenschaufel 4 kennzeichnen. Die Beträge der Bewegungsvektoren der Turbinenschaufel 4 und des Beschichters 5 sind hier gleich groß.

Während des Beschichtungsprozesses gibt der Beschichter 5 den Beschichtungsmaterialstrom 6 in Richtung der Turbinenschaufel 4 ab, so dass dieser auf der Oberfläche der Turbinenschaufel auftritt und hier die Beschichtung ausbildet.

Die Bewegungen des Bearbeitungsroboters 2 und des Positionierungsroboters 1 werden so gesteuert, dass der Beschichter 5 über die gesamte zu beschichtende Oberfläche der Turbinenschaufel 4 bewegt wird.

Dadurch, dass die Turbinenschaufel 4 und der Beschichter 5 so bewegt werden, dass ihre jeweiligen Bewegungsvektoren zumindest während eines Großteils der Beschichtung kollinear entgegengesetzt orientiert sind, ist es möglich, eine hohe Beschichtungsgeschwindigkeit zu erzielen. Der Beschichter 5 kann dabei im Vergleich zu den Verfahren des Standes der Technik bei gleicher Beschichtungsgeschwindigkeit langsamer bewegt werden, so dass der Verschleiß des Bearbeitungsroboters 2 reduziert wird und dessen Bewegungen präziser ausgeführt werden können. Außerdem können durch die koordinierten entgegengesetzten Bewegungen der Turbinenschaufel 4 und des Beschichters 5 auch noch höhere, im Stand der Technik nicht erzielbare, Beschichtungsgeschwindigkeiten realisiert werden.

Als weitere Bearbeitungen sind beispielsweise spanende Verfahren, Laserbearbeitungen oder Sand- und Kugelstrahlen möglich.

## Patentansprüche

1. Verfahren zur Bearbeitung eines Bauteils (4),
bei dem das Bauteil (4) in einer Halterung (3) an einem Positionierungsroboter (1) befestigt und von einer Bearbeitungsvorrichtung (5) an einem Bearbeitungsroboter (2) automatisch bearbeitet wird,
während das Bauteil (4) und die Bearbeitungsvorrichtung (5) gleichzeitig bewegt werden,
**dadurch gekennzeichnet, dass**
das Bauteil (4) und die Bearbeitungsvorrichtung (5) so bewegt werden, dass ihre jeweiligen Bewegungsvektoren zumindest während eines Großteils der Bearbeitung kollinear entgegengesetzt orientiert sind.

2. Verfahren nach Anspruch 1,
**dadurch gekennzeichnet, dass**
das Bauteil (4) und die Bearbeitungsvorrichtung (5) so bewegt werden, dass ihre jeweiligen Bewegungsvektoren kontinuierlich kollinear entgegengesetzt orientiert sind.

3. Verfahren nach einem der Ansprüche 1 oder 2,
**dadurch gekennzeichnet, dass**
der Betrag des Bewegungsvektors des Bauteils (4) genauso groß ist, wie der Betrag des Bewegungsvektors der Bearbeitungsvorrichtung (5).

4. Verfahren nach einem der vorhergehenden Ansprüche,
**dadurch gekennzeichnet, dass**
die Beträge der Bewegungsvektoren des Bauteils (4) und der Bearbeitungsvorrichtung (5) unterschiedlich groß sind.

5. Verfahren nach einem der vorhergehenden Ansprüche,
**dadurch gekennzeichnet, dass**
als Bearbeitungsvorrichtung (5) ein Beschichter verwendet wird, um das Bauteil (4) mit einer Beschichtung zu versehen.

6. Verfahren nach Anspruch 5,
**dadurch gekennzeichnet, dass**
als Beschichter ein Beschichtungsbrenner,
insbesondere ein Plasmabrenner, verwendet wird.

7. Verfahren nach einem der vorhergehenden Ansprüche,
**dadurch gekennzeichnet, dass**
als Bauteil (4) eine Turbinenschaufel bearbeitet wird.

8. Einrichtung zum Positionieren und Bearbeiten eines Bauteils (4) mit einem Positionierungsroboter (1),
welcher eine Halterung (3) für das Bauteil (4) aufweist, einer an einem Bearbeitungsroboter (2) angebrachten Bearbeitungsvorrichtung (5) und einer Steuervorrichtung,
um den Positionierungsroboter (1) und den Bearbeitungsroboter (2) aufeinander abgestimmt im Raum zu bewegen,
**dadurch gekennzeichnet, dass**
die Steuervorrichtung ausgebildet ist, den Positionierungsroboter (1) und den Bearbeitungsroboter (2) so zu steuern, dass das Bauteil (4) in der Halterung (3) und die Bearbeitungsvorrichtung (5) so bewegt werden, dass ihre jeweiligen Bewegungsvektoren zumindest während eines Großteils der Bearbeitung kollinear entgegengesetzt orientiert sind.

9. Vorrichtung nach Anspruch 8,
**dadurch gekennzeichnet, dass**
die Bearbeitungsvorrichtung (5) ein Beschichtungsbrenner, insbesondere ein Plasmabrenner, ist.
